# FASCICULE DE BREVET EUROPEEN

(11) **EP 1 709 782 B1**
(45) Date de publication et mention de la délivrance du brevet: **05.09.2007**
(21) Numéro de dépôt: 05717668.7
(22) Date de dépôt: 14.01.2005
(51) Int. Cl.: H04L 29/08, H04N 1/00, H04L 12/56, G06F 17/30, H04L 12/58, H04Q 7/22

(54) **PROCEDE PERMETTANT A UN UTILISATEUR D'UN TELEPHONE MOBILE D'EXPORTER DES DONNEES MULTIMEDIA VERS UNE PAGE DE DONNEES ELECTRONIQUES**
VERFAHREN, DURCH DAS EIN BENUTZER EINES MOBILTELEFONS MULTIMEDIA-DATEN ZU EINER ELEKTRONISCHEN DATENSEITE EXPORTIEREN KANN
METHOD ENABLING A USER OF A MOBILE TELEPHONE TO EXPORT MULTIMEDIA DATA TO AN ELECTRONIC DATA PAGE

(30) Priorité: 15.01.2004 FR 0450086
(43) Date de publication de la demande: 11.10.2006
(73) Titulaire: Freever, 75008 Paris (FR)
(72) Inventeur: TISSOT, Philippe, F-75008 Paris (FR)
(74) Mandataire: Grynwald, Albert
(86) Numéro de dépôt international: PCT/FR2005/050023
(87) Numéro de publication internationale: WO 2005/071919

(56) Documents cités:
- WO-A-03/077140
- WO-A-03/081466
- US-A- 6 038 295
- US-A1- 2002 133 597

## Description

Le domaine de la présente invention est celui des services proposés aux utilisateurs de téléphones mobiles.

Outre la faculté d'envoyer et de recevoir des messages, notamment de type SMS ou MMS, les opérateurs de téléphonie mobile ont offert aux utilisateurs la faculté de consulter des pages de données électroniques, notamment selon le format connu du WAP. Au moyen de leur téléphone mobile, les utilisateurs peuvent ainsi naviguer sur ces pages et accéder à des données multimédia, constituées notamment par des textes, des photos, des sons, et des vidéos.

Or à l'usage, il se révèle que les pages de données électroniques, notamment au format WAP, posent un problème d'absence d'interactivité. En effet, ces pages, notamment au format WAP, sont seulement consultables sans qu'il soit possible, à partir d'un simple téléphone mobile, d'en télécharger ou d'en modifier le contenu. Par exemple, un utilisateur ne peut pas télécharger une photo depuis une page de données électroniques, notamment une page au format WAP, vers son téléphone mobile, notamment dans le but de la conserver dans la mémoire de son téléphone. Symétriquement, un utilisateur ne peut pas non plus télécharger une photo depuis son téléphone mobile vers une page de données électroniques, notamment une page au format WAP, notamment dans le but de mettre à jour une page personnelle ou un journal d'expression multimédia de type BLOG. Ce caractère étanche, notamment propre au format WAP, prive donc les utilisateurs de fonctionnalités interactives.

Le document WO 03/077140 décrit un procédé permettant à l'utilisateur d'un téléphone mobile d'exporter des données multimédia vers une page de données électroniques.

La présente invention résout ce problème. L'invention est définie par les revendications indépendantes de procédé 1, 5 et 6. Elle concerne un procédé permettant à un utilisateur d'un téléphone mobile d'exporter, très aisément, des données multimédia vers une page de données électroniques, notamment au format WAP ou HTML. La page de données électroniques, notamment au format WAP ou HTML, est mémorisée dans un serveur informatique distant connecté au téléphone mobile via un réseau de téléphonie mobile de manière que les utilisateurs puissent consulter cette page de données électroniques. Le procédé comprend l'étape, pour le serveur informatique distant, d'associer un lien, notamment de type hypertexte, à des emplacements de premières données multimédia placées dans la page de données électroniques. Il s'agira par exemple d'un lien figurant sous l'emplacement d'une photo, une vidéo, un son.

Le procédé comprend en outre l'étape, pour l'utilisateur, de sélectionner un emplacement dans la page de données électroniques, en activant le lien au moyen d'un organe de commande du téléphone mobile, l'étape, pour l'utilisateur, de sélectionner un second élément multimédia parmi des secondes données multimédia mémorisées dans le téléphone mobile de l'utilisateur, par exemple une photo particulière contenue dans la mémoire du téléphone mobile de l'utilisateur muni d'un appareil photographique ou d'une caméra vidéo.

Le procédé comprend en outre l'étape, pour le serveur informatique distant, d'insérer une indication de l'emplacement ainsi sélectionné dans un premier message, notamment de type MMS ou e-mail, et d'envoyer le premier message vers le téléphone mobile de l'utilisateur, l'étape, pour l'utilisateur, d'insérer le second élément multimédia ainsi sélectionné dans un message de réponse au premier message, notamment de type MMS ou e-mail, et d'envoyer le message de réponse vers le serveur informatique distant.

Le procédé comprend en outre l'étape, pour le serveur informatique distant, d'insérer le second élément multimédia dans la page de données électroniques.

Ainsi, les utilisateurs peuvent publier aisément dans des pages de données électroniques, notamment au format WAP, des éléments multimédia, notamment des photos, des vidéos, des sons, pris au moyen de leurs téléphones mobiles munis d'un appareil photo, de type camera phone ou d'une caméra vidéo. L'invention permet effectivement d'éviter la nécessité, pour l'utilisateur, de retenir et/ou de saisir une adresse spécifique à laquelle envoyer les secondes données multimédia. L'opération de mise à jour de la page de données électroniques est alors très simple pour l'utilisateur qui a, seulement, à faire une commande « répondre » sur le premier message reçu du serveur.

Dans une réalisation, le procédé inclut l'étape, pour ledit serveur informatique distant, de détecter le numéro de téléphone de l'utilisateur connecté audit serveur.

Dans une réalisation, le procédé inclut l'étape, pour l'utilisateur, de s'identifier auprès dudit serveur informatique distant lors d'une phase d'authentification et/ou lors d'une saisie de son numéro de téléphone sur requête dudit serveur informatique distant.

Dans une réalisation, l'étape du procédé consistant à insérer une indication de l'emplacement est réalisée par insertion de l'indication dans un champ « adresse d'origine » et/ou dans un champ « sujet ».

L'invention concerne également un procédé spécifique destiné à être mis en oeuvre dans un serveur informatique distant et un procédé spécifique destiné à être mis en oeuvre par l'utilisateur de manière à réaliser l'invention.

Selon l'invention, le serveur associe des liens à des emplacements. L'utilisateur sélectionne un emplacement en activant de tels liens. Après sélection d'un emplacement par l'utilisateur, le serveur peut connaître automatiquement le numéro de téléphone auquel envoyer le premier message. Une telle reconnaissance du numéro peut être le fait d'une phase d'authentification préalable ou être une détection du numéro d'appel réalisée par un module spécifique du serveur.

Dans une autre réalisation, il est demandé que l'utilisateur saisisse le numéro auquel il souhaite recevoir le premier message. La saisie de ce numéro ou adresse peut être réalisée soit sur la page de données électronique elle-même, soit sur une autre page supplémentaire qui apparaît lorsque le lien associé à l'emplacement est activé.

Le premier message envoyé par le serveur contient diverses données, particulièrement dans les champs classiques d'adresse d'origine et de sujet de message. Ainsi, le sujet du premier message contient avantageusement des indications d'emplacement de manière à permettre, à la réception du message de réponse, de repérer où doivent être insérées les secondes données multimédia contenues dans ce message de réponse. De telles indications comprennent notamment un identifiant de la page ainsi qu'un identifiant de la position de l'emplacement dans la page. Par exemple, dans un canevas offert par un site pour une page personnelle, l'emplacement sera celui de la photo du propriétaire du site personnel dans une page de Curriculum Vitae. Cette indication de l'emplacement peut être réalisée par insertion de l'indication dans un champ « adresse d'origine » et/ou dans un champ « sujet ».

Le champ « sujet du message » peut aussi servir à identifier l'utilisateur en incluant son adresse ou son numéro de téléphone détecté ou saisi.

Le champ « adresse d'origine » peut également servir à identifier l'utilisateur, auquel est attaché une adresse et/ou à connaître l'emplacement auquel peut être associé une adresse spécifique.

En effet, le serveur mémorise avantageusement un triplet « adresse d'origine », identifiant de l'utilisateur, emplacement dans la page. L'indication d'emplacement est alors constituée par l'identifiant et l'adresse d'origine.

Ainsi, la connaissance de l'adresse d'origine et de l'identifiant de l'utilisateur à l'aide des deux champs évoqués ci-dessus permet au serveur de connaître l'emplacement où les secondes données multimédia doivent être insérées. De cette façon, la lecture des deux champs évoqués suffit au serveur pour déterminer l'emplacement.

On note qu'il est également possible que le premier message ne contienne aucune donnée quant à l'identification de l'utilisateur. Dans ce cas, des données qui transitent sur le réseau et/ou le message de réponse peuvent servir à cette identification. Il est alors envisageable que le réseau transmette le numéro de l'utilisateur lors de l'étape d'envoi du message de réponse par l'utilisateur. Il est aussi envisageable que le message de réponse contienne les données d'identification relatives à l'utilisateur. Ces données d'identification sont insérées automatiquement lors de la commande de réponse, par exemple dans le champ « sujet du message » en conservant son libellé. Cette dernière caractéristique permet d'identifier l'utilisateur même lorsque le réseau ne transmet pas le numéro de l'utilisateur.

Le premier message contient aussi avantageusement, dans le corps de message, des instructions sur le déroulement de l'opération à l'intention de l'utilisateur. Par exemple, le corps de message peut alors contenir une liste d'étape du style : actionner la commande « répondre », attacher le fichier à insérer à l'emplacement indiqué dans le sujet du message, envoyer le message de réponse à l'adresse figurant dans le champ « adresse d'origine ».

L'invention est avantageusement utilisée pour la mise à jour de pages personnelles, de blogs... Dans ces applications, le serveur peut aussi utiliser une simple reconnaissance du numéro de l'utilisateur, décorrélée du contenu des champs « adresse d'origine » et « sujet » du message de réponse reçu en provenance de l'utilisateur et savoir ainsi automatiquement où insérer les secondes données multimédia. Il associe alors par exemple ces données à la mise à jour d'une page ou d'un blog auquel correspond le numéro de téléphone auquel a été envoyé le premier message. Dans ce cas, le numéro de téléphone lui-même est une indication d'emplacement puisque la page et/ou le blog y sont associés.

## Revendications

1. Procédé permettant à un utilisateur d'un téléphone mobile d'exporter des données multimédia vers une page de données électroniques, notamment au format WAP ou HTML; ladite page de données électroniques étant mémorisée dans un serveur informatique distant connecté audit téléphone mobile via un réseau de téléphonie mobile; ledit procédé comprenant les étapes suivantes :
l'étape, pour ledit serveur informatique distant, d'associer un lien, notamment de type hypertexte, à des emplacements de premières données multimédia placées dans ladite page de données électroniques,
- l'étape, pour ledit utilisateur, de sélectionner un emplacement d'un premier élément multimédia, parmi lesdites premières données multimédia placées dans ladite page de données électroniques, en activant ledit lien au moyen d'un organe de commande dudit téléphone mobile,
- l'étape, pour ledit serveur informatique distant, d'insérer une indication de l'emplacement ainsi sélectionné dans un premier message, notamment de type MMS ou e-mail, et d'envoyer ledit premier message vers ledit téléphone mobile dudit utilisateur,
- l'étape, pour ledit utilisateur, de sélectionner un second élément multimédia, parmi des secondes données multimédia mémorisées dans ledit téléphone mobile dudit utilisateur,
l'étape, pour ledit utilisateur, d'insérer ledit second élément multimédia ainsi sélectionné dans un message de réponse audit premier message, notamment de type MMS ou e-mail, et d'envoyer ledit message de réponse vers ledit serveur informatique distant,
- l'étape, pour ledit serveur informatique distant, d'insérer ledit second élément multimédia dans ladite page de données électroniques, à l'emplacement indiqué dans le premier message,
de sorte que les utilisateurs peuvent publier dans des pages de données électroniques, notamment au format WAP, des éléments multimédia, notamment des photos ou des vidéos prises au moyen de téléphones mobiles comportant un appareil photo ou une caméra.

2. Procédé selon la revendication 1, incluant l'étape, pour ledit serveur informatique distant, de détecter le numéro de téléphone de l'utilisateur connecté audit serveur.

3. Procédé selon la revendication 1, incluant l'étape, pour l'utilisateur, de s'identifier auprès dudit serveur informatique distant lors d'une phase d'authentification et/ou lors d'une saisie de son numéro de téléphone sur requête dudit serveur informatique distant.

4. Procédé selon l'une des revendications précédentes, dans lequel l'étape d'insérer une indication de l'emplacement est réalisée par insertion de l'indication dans un champ « adresse d'origine » et/ou dans un champ « sujet ».

5. Procédé permettant à un utilisateur d'un téléphone mobile d'exporter des données multimédia vers une page de données électroniques, notamment au format WAP ou HTML; ladite page de données électroniques étant mémorisée dans un serveur informatique distant connecté audit téléphone mobile via un réseau de téléphonie mobile; ledit procédé comprenant, pour ledit serveur informatique distant, les étapes suivantes :
- l'étape d'associer un lien, notamment de type hypertexte, à des emplacements de premières données multimédia placées dans ladite page de données électroniques,
- l'étape d'insérer une indication d'un emplacement d'un premier élément multimédia sélectionné par ledit utilisateur parmi lesdites premières données multimédia placées dans ladite page de données électroniques dans un premier message, notamment de type MMS ou e-mail, et d'envoyer ledit premier message vers ledit téléphone mobile dudit utilisateur,
- l'étape de recevoir en provenance dudit utilisateur, un message de réponse incluant un second élément multimédia,
- l'étape d'insérer ledit second élément multimédia dans ladite page de données électroniques, à l'emplacement indiqué dans le premier message,
de sorte que les utilisateurs peuvent publier dans des pages de données électroniques, notamment au format WAP, des éléments multimédia, notamment des photos ou des vidéos prises au moyen de téléphones mobiles comportant un appareil photo ou une caméra.

6. Procédé permettant à un utilisateur d'un téléphone mobile d'exporter des données multimédia vers une page de données électroniques, notamment au format WAP ou HTML: ladite page de données électroniques étant mémorisée dans un serveur informatique distant connecté audit téléphone mobile via un réseau de téléphonie mobile, un lien, notamment de type hypertexte, étant associé à des emplacements de premières données multimedia placées dans ladite page de données électroniques; ledit procédé comprenant, pour ledit utilisateur, les étapes suivantes:
- l'étape de sélectionner un emplacement d'un premier élément multimédia, parmi lesdites premières données multimédia placées dans ladite page de données électroniques, en activant ledit lien au moyen d'un organe de commande dudit téléphone mobile,
- l'étape de recevoir un premier message, notamment de type MMS ou e-mail, dudit serveur informatique distant, ledit premier message incluant une indication de l'emplacement sélectionné,
- l'étape de sélectionner un second élément multimédia, parmi des secondes données multimédia mémorisées dans ledit téléphone mobile dudit utilisateur,
- l'étape d'insérer ledit second élément multimédia ainsi sélectionné dans un message de réponse audit premier message, notamment de type MMS ou e-mail, et d'envoyer ledit message de réponse vers ledit serveur informatique distant,
de sorte que les utilisateurs peuvent publier dans des pages de données électroniques, notamment au format WAP, des éléments multimédia, notamment des photos ou des vidéos prises au moyen de téléphones mobiles comportant un appareil photo ou une caméra.

## Claims

1. Method enabling a user of a mobile telephone to export multimedia data to an electronic data page, particularly in a WAP or HTML format; said electronic data page is stored in a remote computer server which is connected to the mobile telephone via a mobile telephone network; said method comprising the following steps:
- the step during which said remote computer server associates a link, particularly a hypertext link, with first multimedia data locations which are placed in said electronic data pages;
- the step for the user of selecting a location of a first multimedia element from amongst said first multimedia data placed in said electronic data page by activating said link through means of a control element of the mobile telephone;
- the step for said remote computer server of inserting an indication of the location thus selected in a first message, particularly of an MMS or e-mail type, and sending said first message to said mobile telephone of said user;
- the step for said user of selecting a second multimedia element from amongst second multimedia data stored in said mobile telephone of said user,
- the step for said user of inserting said second multimedia element thus selected in a reply message to said first message, particularly of an MMS or e-mail type, and sending said reply message to said remote computer server,
- the step for said remote computer server to insert said second multimedia element into said electronic data page, at the location indicated in the first message, such that users can publish multimedia elements, particularly photos or videos taken with the aid of mobile telephones comprising a photographic camera or a film camera, in electronic data pages, particularly in a WAP format.

2. A method according to claim 1, including the step, for said remote computer server, of detecting the telephone number of the user connected to said server.

3. A method according to claim 1, including the step, for the user, of identifying themselves to said remote computer server during an authentication phase and/or during an entry of their telephone number upon request of said remote computer server.

4. A method according to one of the preceding claims, wherein the step of inserting an indication of the location is carried out by insertion of the indication in an "original address" field and/or in a "subject" field.

5. A method enabling a user of a mobile telephone to export multimedia data to an electronic data page, particularly in a WAP or HTML format; said electronic data page is stored in a remote computer server which is connected to said mobile telephone via a mobile telephone network; said method comprising for said remote computer server the following steps:
- the step of associating a link, particularly a hypertext link, with first multimedia data locations which are placed in said electronic data page,
- the step of inserting an indication of a location of a first multimedia element selected by said user from said first multimedia data placed in said electronic data page in a first message, particularly of an MMS or e-mail type, and sending said first message to said mobile telephone of said user,
- the step of receiving from said user, a reply message including a second multimedia element,
- the step of inserting said second multimedia element into said electronic data page, at the location indicated in the first message, such that users can publish multimedia elements, particularly photos or videos taken with the aid of mobile telephones comprising a photographic camera or a film camera, in electronic data pages, particularly in a WAP format.

6. A method enabling a user of a mobile telephone to export multimedia data to an electronic data page, particularly in a WAP or HTML format; said electronic data page is stored in a remote computer server which is connected to said mobile telephone via a mobile telephone network, a link, particularly of hypertext type, being associated to locations of first multimedia data placed in said electronic data page, said method comprising, for said user, the following steps:
- the step of selecting a location for a first multimedia element from amongst said first multimedia data placed in said electronic data page by activating said link through the means of a control element of said mobile telephone,
- the step of receiving a first message, particularly of an MMS or e-mail type, from said remote computer server, said first message including an indication of the selected location
- the step of selecting a second multimedia element, from amongst said second multimedia data recorded in said mobile telephone of said user,
- the step of inserting the second multimedia element thus selected in a message responding to said first message, particularly of an MMS or e-mail type, and sending said reply message to said remote computer server, in such that users can publish multimedia elements, particularly photos or videos taken with the aid of mobile telephones comprising a photographic camera or a film camera, in electronic data pages, particularly in WAP format.

## Patentansprüche

1. Verfahren, mit dem ein Benutzer eines Mobiltelefons Multimedia-Daten, speziell im Format WAP oder HTML, auf eine Seite mit elektronischen Daten exportieren kann; die besagte Seite mit den elektronischen Daten wird dabei in einem entfernt befindlichen Computerserver abgespeichert, der über ein Mobilfunknetz mit dem besagten Mobiltelefon verbunden ist; das besagte Verfahren enthält dabei die folgenden Schritte:
- den Schritt für den besagten entfernt befindlichen Computerserver, einen Link, speziell vom Typ Hypertext, zu den Speicherplätzen mit den ersten Multimedia-Daten aufzubauen, die sich auf der besagten Seite mit den elektronischen Daten befinden,
- den Schritt für den besagten Benutzer, einen Speicherplatz eines ersten Multimediaelements unter den besagten ersten Multimedia-Daten auszuwählen, die sich auf der besagten Seite mit den elektronischen Daten befinden, indem er den besagten Link mithilfe eines Steuerorgans des besagten Mobiltelefons ansteuert,
- den Schritt für den besagten entfernt befindlichen Computerserver, einen Hinweis über den so ausgewählten Speicherplatz in eine erste Nachricht, speziell vom Typ MMS oder E-Mail einzufügen, und die besagte erste Nachricht zum besagten Mobiltelefon des besagten Benutzers zu senden,
- den Schritt für den besagten Benutzer, ein zweites Multimediaelement unter den besagten zweiten Multimedia-Daten auszuwählen, die im besagten Mobiltelefon des besagten Benutzers gespeichert sind,
- den Schritt für den besagten Benutzer, das besagte zweite ausgewählte Multimediaelement in eine Antwort auf die besagte erste Nachricht, speziell vom Typ MMS oder E-Mail einzufügen, und die besagte Antwort zum besagten entfernt befindlichen Computerserver zu senden,
- den Schritt für den besagten entfernt befindlichen Computerserver, das besagte zweite Multimediaelement auf der besagten Seite mit den elektronischen Daten an jenem Speicherplatz einzufügen, der in der ersten Nachricht angegeben wurde,
sodass die Benutzer Multimediaelemente vor allem im Format WAP auf Seiten mit den elektronischen Daten veröffentlichen können, wie beispielsweise Fotos oder Videos, die mit Mobiltelefonen aufgenommen worden sind, die über einen Fotoapparat oder eine Videokamera verfügen.

2. Verfahren nach Anspruch 1, das den Schritt für den besagten entfernt befindlichen Computerserver enthält, die Telefonnummer des Benutzers zu erfassen, der mit dem besagten Server verbunden ist.

3. Verfahren nach Anspruch 1, das den Schritt für den Benutzer enthält, sich gegenüber dem besagten entfernt befindlichen Computerserver in einer Authentisierungsphase und/ oder durch Eingabe seiner Telefonnummer nach Aufforderung durch den besagten entfernt befindlichen Computerserver zu identifizieren.

4. Verfahren nach einem der vorherigen Ansprüche, bei dem der Schritt des Einfügens eines Hinweises über den Speicherplatz durch das Einfügen eines Hinweises in ein Textfeld "Herkunftsadresse" und/ oder in ein Textfeld "Inhalt" erfolgt.

5. Verfahren, mit dem ein Benutzer eines Mobiltelefons Multimedia-Daten auf eine Seite mit elektronischen Daten, speziell im Format WAP oder HTML exportieren kann; die besagte Seite mit elektronischen Daten ist dabei auf einem entfernt befindlichen Computerserver abgespeichert, der über ein Mobilfunknetz mit dem besagten Mobiltelefon verbunden ist; das besagte Verfahren enthält dabei für den entfernt befindlichen Computerserver die folgenden Schritte:
- den Schritt, einen Link, speziell vom Typ Hypertext, zu den Speicherplätzen mit den ersten Multimedia-Daten aufzubauen, die sich auf der besagten Seite mit den elektronischen Daten befinden,
- den Schritt, einen Hinweis über einen Speicherplatz eines ersten Multimediaelements, das vom Benutzer unter den besagten ersten Multimedia-Daten ausgewählt wurde, die sich auf der besagten Seite mit elektronischen Daten befinden, in eine erste Nachricht, vor allem vom Typ MMS oder E-Mail einzufügen, und die besagte erste Nachricht zum besagten Mobiltelefon des besagten Benutzers zu senden,
- den Schritt, vom besagten Benutzer eine Antwort mit einem zweiten Multimediaelement zu erhalten,
- den Schritt, das besagte zweite Multimediaelement auf der besagten Seite mit den elektronischen Daten an jenem Speicherplatz einzufügen, der in der ersten Nachricht angegeben wurde,
sodass die Benutzer Multimediaelemente auf den Seiten mit den elektronischen Daten, vor allem im Format WAP veröffentlichen können, wie beispielsweise Fotos oder Videos, die mit Mobiltelefonen aufgenommen worden sind, die über einen Fotoapparat oder eine Videokamera verfügen.

6. Verfahren, mit dem ein Benutzer eines Mobiltelefons Multimedia-Daten auf eine Seite mit elektronischen Daten, speziell im Format WAP oder HTML exportieren kann; die besagte Seite mit elektronischen Daten ist dabei auf einem entfernt befindlichen Computerserver abgespeichert, der über ein Mobilfunknetz mit dem besagten Mobiltelefon verbunden ist, wobei zu den Speicherplätzen der ersten Multimedia-Daten, die auf der besagten Seite mit den elektronischen Daten liegen, ein Link speziell vom Typ Hypertext aufgebaut wird; das besagte Verfahren enthält dabei für den besagten Benutzer die folgenden Schritte:
- den Schritt zur Auswahl eines Speicherplatzes eines ersten Multimediaelements unter den besagten ersten Multimedia-Daten, die sich auf der besagten Seite mit den elektronischen Daten befinden, durch die Anwahl des besagten Links mithilfe eines Steuerorgans des besagten Mobiltelefons,
- den Schritt des Erhalts einer ersten Nachricht, speziell vom Typ MMS oder E-Mail vom besagten entfernt befindlichen Computerserver, wobei die besagte erste Nachricht einen Hinweis über den ausgewählten Speicherplatz enthält,
- den Schritt zur Auswahl eines zweiten Multimediaelements unter den besagten zweiten Multimedia-Daten, die im besagten Mobiltelefon des besagten Benutzers abgespeichert sind,
- den Schritt des Einfügens des besagten zweiten ausgewählten Multimediaelements in eine Antwort auf die besagte erste Nachricht, speziell vom Typ MMS oder E-Mail, und des Sendens der besagten Antwort zum besagten entfernt befindlichen Computerserver,
sodass die Benutzer Multimediaelemente auf Seiten mit den elektronischen Daten, vor allem im Format WAP veröffentlichen können, wie beispielsweise Fotos oder Videos, die mit Mobiltelefonen aufgenommen worden sind, die über einen Fotoapparat oder eine Videokamera verfügen.
